# EUROPEAN PATENT APPLICATION

(11) **EP 3 885 502 A1**
(43) Date of publication of application: **29.09.2021**
(21) Application number: 21175550.9
(22) Date of filing: 23.07.2018
(51) Int. Cl.: E03D 11/14, F16B 41/00, E03C 1/322, F16B 2/04, F16B 37/14

(54) **EXPANSIBLE SLEEVE FOR FACILITATING THE INSTALLATION OF WALL-HUNG OBJECTS, KIT COMPRISING SAID SLEEVE AND RELATED METHOD**

(30) Priority: 25.07.2017 IT 201700084546; 16.07.2018 IT 201800007219
(62) Divisional of application: 18748855.6
(71) Applicant: Sanitea S.R.L., 05100 Terni (IT)
(72) Inventor: CUCCINIELLO, Daniele, 05100 Terni (IT)
(74) Representative: Mannucci, Michele

(57) **Abstract**

A kit is disclosed for installing bathroom fixtures or other objects to be hung to a wall. The kit comprises a sleeve (1) having a first element (1a) with a through axial cavity (101) and a second element (1b) that can coaxially engage the first element (1a). A screw coupling (107, 117) is also provided between the first element (1a) and the second element (Ib), with a first thread (107) at a first end of the first element (1a) and a second thread (117) on the second element (1b), that can engage the first thread (107). The screw coupling is so configured that when the first thread (107) and the second thread (117) engage each other, the reciprocal rotation between the first element (1a) and the second element (1b) causes a change in the axial length of the sleeve (1). The second element (1b) of the sleeve (1) comprises a connection means (123) so configured and arranged to be engaged by means of a maneuvering tool (125) through the through axial cavity (101).

## Description

### TECHNICAL FIELD

The present invention relates to systems for fixing objects that shall be hung to bearing structures, for instance to a wall, in particular systems for fixing wall-hung bathroom fixtures. More specifically, embodiments disclosed herein relate to kits comprising a sleeve to be positioned before mounting the bathroom fixture and able to adapt to the dimension of a niche provided in the bathroom fixture.

The invention also relates to a method for mounting wall-hung bathroom fixtures or other objects to be hung to a bearing structure.

### BACKGROUND ART

For wall-mounting of wall-hung bathroom fixtures, specific brackets shall be positioned in the wall, which are designed according to UNI standards and are required for positioning and anchoring the bathroom fixtures. The brackets end with threaded bars, allowing interaction with the various fixing systems.

The fixing systems are constituted by several modular elements.

One of these elements is a pin made of steel, which shall be applied to the threaded bars mentioned above. Once this connection has been done, the bathroom fixture can be anchored by means of the fixing system. EP2857604 A1, DE202009014171 U1, DE201310112005 A1, EP1338711 A1, EP2847393 A1 describe various fixing systems.

For the anchoring, the first thing to do is to position a system element in a specific area of the bathroom fixture and then to make it interact with a pin made of steel.

This system element is a sort of plastic sleeve, the inner diameter whereof is almost equal to the diameter of the steel pin. This positioning procedure is done before the mounting, as these operations are typically characterized by low or null visibility. The operator shall therefore be sure that all the elements are positioned in the right way in the specific areas, so as to perform this operation.

The area of the bathroom fixture where the plastic sleeve shall be positioned is constituted by a niche, whose shape is not standardized. The niche is accessible from the bottom and is in communication with the anchoring wall through a hole. The steel pin passes through this hole so as to interact with the rest of the fixing system.

The plastic sleeve shall therefore remain in a fixed position inside the niche, against the action of gravity so that the hole of the niche and the hole of the sleeve are coaxial with each other.

This need is satisfied, according to the prior art, through different methods, disclosed in the above-mentioned documents.

EP2857604 discloses a system comprising a sleeve, on the upper surface of which plastic brushes or, alternatively, a spongy pad are provided, so that the height of the overall element is greater than the length of the niche. The brushes allow positioning the sleeve inside the niche through interference, so that the sleeve remains in the position chosen by the operator. Obviously, in order to operate, this system shall contrast two walls of the niche. This known system has some disadvantages as, during the storing step, damages can occur to the plastic/spongy elements. This drawback can result in problems during the mounting step, as the system does not ensure interference between sleeve and walls of the niche.

DE202009014171 discloses a fixing system comprising a sleeve and an innovative element shaped like a hollow truncated cone. An end of the element shaped like a hollow truncated cone is constituted by an enlargement so that the diameter thereof is slightly greater than the greater diameter of the truncated cone. The other end is constituted by a thread whose nominal diameter is equal to the lower diameter of the truncated cone. The sleeve has a corresponding thread allowing the coupling between truncated-conical element and sleeve. Once the sleeve has been positioned inside the niche of the bathroom fixture to be wall-hung, from the side of the rear surface of the bathroom fixture, the truncated cone is inserted into the hole in communication with the niche so that the two elements can be coupled. The end part with the enlargement has a diameter greater than the diameter of the hole and it will be therefore possible to realize an integral fixed coupling in correspondence of the hole.

DE201310112005 discloses a fixing system constituted by sleeve and truncated cone. The difference with respect to the system described above is only the different method for coupling the sleeve and the truncated cone, as in this case it uses a toothing.

EP1338711 A1 discloses a system where, on an end of the sleeve, positioning wings are provided whose length is equal to the length of the hole provided on the bathroom fixture in question. the wings are made of a deformable plastic. The sleeve is positioned in the niche and the operator shall deform these elements so that they can be inserted into the hole. When not deformed, the wings do not allow the insertion into the hole, as, if we imagine a circle circumscribed to the wings, it has a greater diameter than the diameter of the hole. A small projection is provided on the end of each wing. The projections allows gripping the rear surface of the bathroom fixture. Installation difficulties will occur when the small dimensions of the niche do not allow the insertion of the positioning wings inside the hole. Further problems can occur in case the length of the hole is lower than the length of the positioning wings: in this case the system will be poor and does not ensure immobility between sleeve and bathroom fixture.

EP2847393 A1 discloses a fixing system providing for accessing the niche for positioning the sleeve from the rear surface of the bathroom fixture. On the sleeve, projections are provided, and the hole allowing accessing the niche has such a shape to allow the entrance of this latter. Once the sleeve has been inserted inside the niche and by rotating it by a given angle, it will grip the adjacent areas of the bathroom fixture. The relative position of the sleeve with respect to the hole, in the instant following the rotation, prevents the removal thereof. This system requires, to allow an adequate positioning, small tolerances for realizing the niche.

It is necessary to realize a system for mounting bathroom fixtures or other wall-hung objects, which overcome, completely or at least partially, the prior art drawbacks.

In particular, it will be useful to have available a mounting system provided with a sleeve that can be adapted efficiently to different shapes and/or dimensions of the mounting seats or niches provided inside the object to be hung.

It would be also useful to have available a mounting system that can be easily removed from the wall-hung object. It would be also useful to have available a fixing system wherein the sleeve does not require anchoring elements projecting from the rear surface of the object to be hung.

### SUMMARY OF THE INVENTION

According to a first aspect, a kit for mounting wall-hung objects, in particular wall-hung bathroom fixtures, is described comprising an expansible sleeve. The expansible sleeve comprises a first element with a through axial cavity and a second element that can coaxially engage the first element. The first element and the second element can be connected together by means of a screw coupling having a first thread at a first end of the first element and a second thread on the second element. The two threads can be mutually engaged and the screw coupling is so configured that, when the first thread and the second thread engage each other, the reciprocal rotation between the first element and the second element causes a change in the axial length of the sleeve. This allows adapting the sleeve to the variable sizes of a seat or niche housing the sleeve, provided in the object to be hung. The second element of the sleeve comprises a connection means configured and arranged to be engaged by means of a maneuvering tool through the through axial cavity of the first element of the sleeve. Through the maneuvering tool, the second element can be rotated with respect to the first element so as to cause an adjustment in the axial length of the sleeve.

In some embodiments, the kit also comprises an anchoring pin, which can be introduced into the through axial cavity of the sleeve. The anchoring pin can be introduced into the through axial cavity from an end of the first element opposite to the second element.

In some embodiments, the first element of the sleeve comprises a substantially radial through hole, i.e. transverse with respect to the through axial cavity, and a constraint member, for example a screw, that can be inserted in said through hole. The through hole is advantageously threaded to allow screwing the screw to the sleeve. The screw, or other suitable constraint member, can be introduced into the sleeve through the radial hole until it projects in the through axial cavity of the sleeve. In this way, during mounting the constraint member can co-act with an anchoring pin introduced into the axial cavity of the sleeve and generate a thrust resulting in the object to be hung resting by pressure against the bearing structure. To this end, the anchoring pin may comprise a flaring elongated according to an axial direction of the anchoring pin and of the sleeve. The constraint member co-acts with an inclined surface of the flaring to generate a traction force onto the anchoring pin.

According to a further aspect, the invention also provides for a system comprising an object to be hung, in particular a bathroom fixture, and at least a kit as described above. The kit may comprise a single sleeve, or more sleeves, for example two sleeves, with respective elements associated thereto.

According to a further aspect, the invention relates to a method for fixing an object to be hung, in particular a bathroom fixture, to a bearing structure, the object to be hung comprising at least one niche that can be accessed from the outside of the object and is delimited by a first wall and by a second wall that are opposite to each other, and wherein the first wall has a through opening. According to embodiments described herein, the method comprises the following steps:
inserting, into the niche, a sleeve of the kit described above, so that the first element of the sleeve is oriented towards the first wall of the object to be hung and the second element of the sleeve is directed towards the second wall of the object to be hung,
aligning the through axial cavity of the sleeve with the through opening of the first wall of the object to be hung;
inserting a maneuvering tool through the through opening of the first wall and through the through axial cavity of the sleeve, up to engage the second element of the sleeve with the maneuvering tool;
through said maneuvering tool, rotating the second element of the sleeve with respect to the first element of the sleeve, so as axially to elongate the sleeve up to lock it in the niche by interference.

Further advantageous characteristics and embodiments of the kit, of the system, and of the method according to the present invention are described hereunder with reference to the attached drawings and in the appended claims, which form an integral part of the present description.

### BRIEF DESCRIPTION OF THE DRAWINGS

The invention shall be better understood by following the description and the accompanying drawing, which show a non-limiting example of embodiment of the invention. More in particular, in the drawing:
Fig.1 is an exploded view of a sleeve in a first embodiment, in combination with a maneuvering tool;
Figs.2 and 3 show longitudinal cross sections, according to II-II of Fig.1, of respectively a first element and a second element of the sleeve of Fig.1;
Fig.4 is an axonometric view of the sleeve of Fig.1 assembled with the maneuvering tool extracted;
Fig.5 is an axonometric view analogous to that of Fig.4, with the maneuvering tool inserted into the sleeve;
Figs.6A to 6I are sequences for mounting a bathroom fixture using a kit comprising the sleeve and the tool of Figs. 1 to 5;
Fig.7 is an exploded view of a sleeve in a second embodiment, in combination with a maneuvering tool;
Figs.8 and 9 show longitudinal cross sections of respectively a first element and a second element of the sleeve of Fig.7;
Fig.10 is an axonometric view of the sleeve of Fig.7 assembled with the maneuvering tool extracted;
Fig.11 is an axonometric view analogous to that of Fig.10, with the maneuvering tool inserted into the sleeve;
Fig.12 is an exploded view of a sleeve in a third embodiment, in combination with a maneuvering tool;
Figs. 13 and 14 show longitudinal cross sections of respectively a first element and a second element of the sleeve of Fig.12;
Fig.15 is an axonometric view of the sleeve of Fig.12 assembled with the maneuvering tool extracted;
Fig.16 is an axonometric view analogous to that of Fig.1, with the maneuvering tool inserted into the sleeve.

### DETAILED DESCRIPTION OF EMBODIMENTS

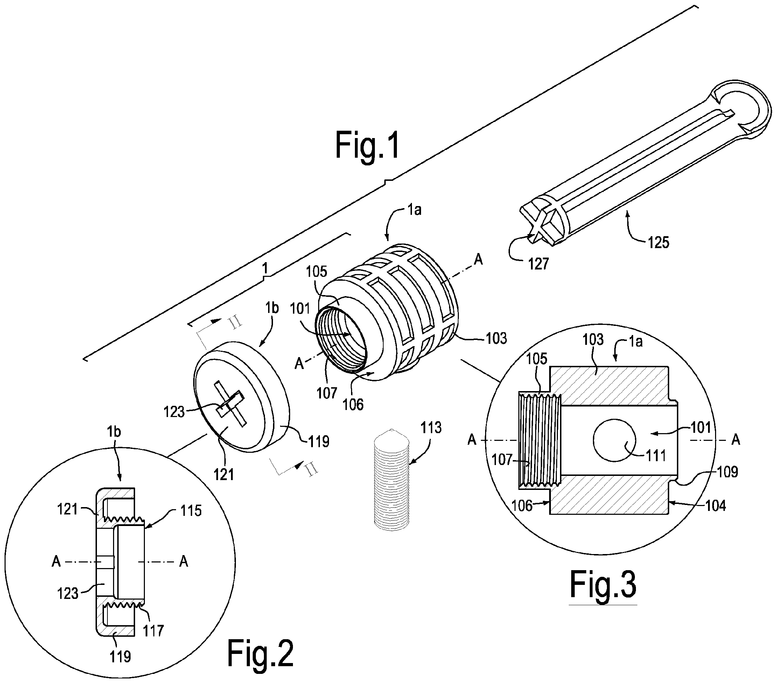

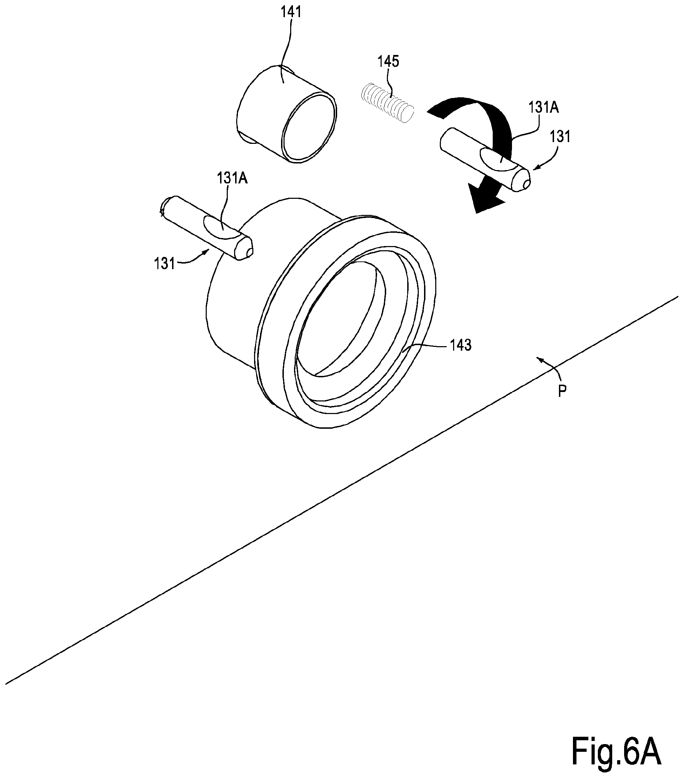

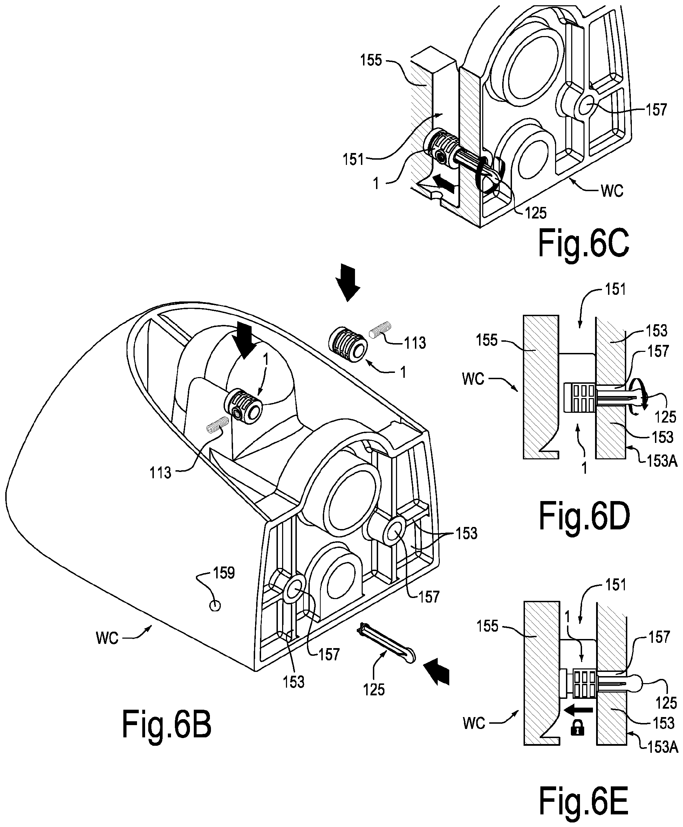

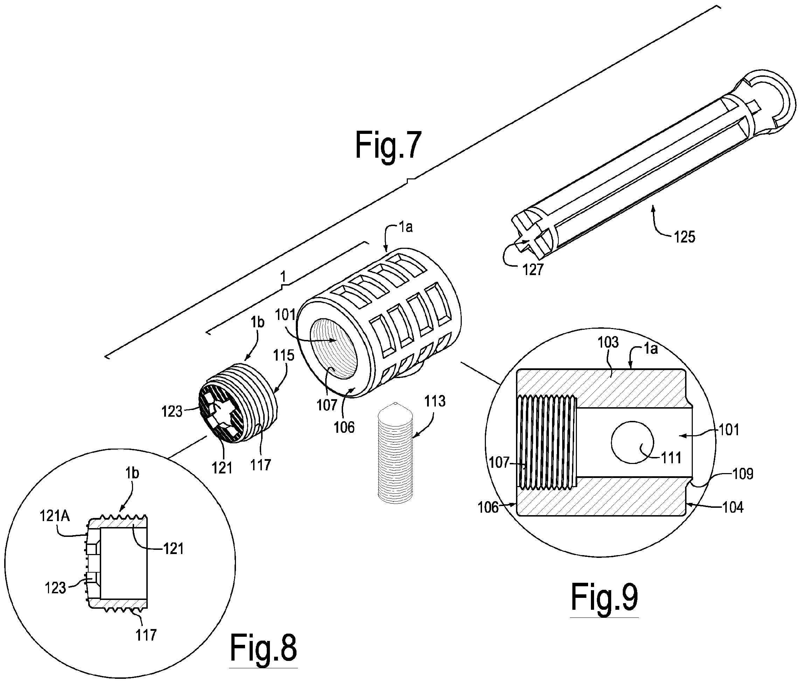

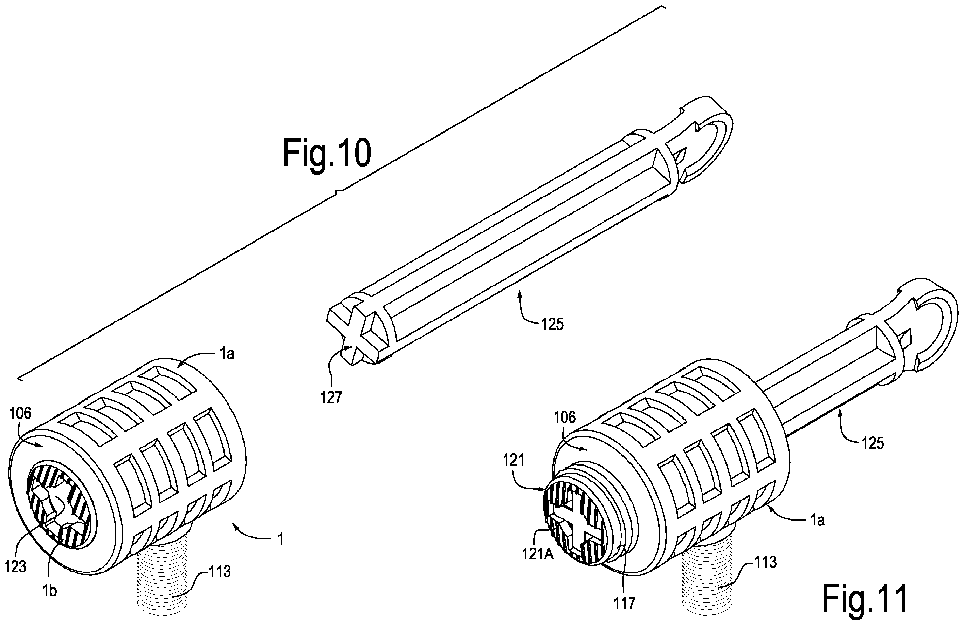

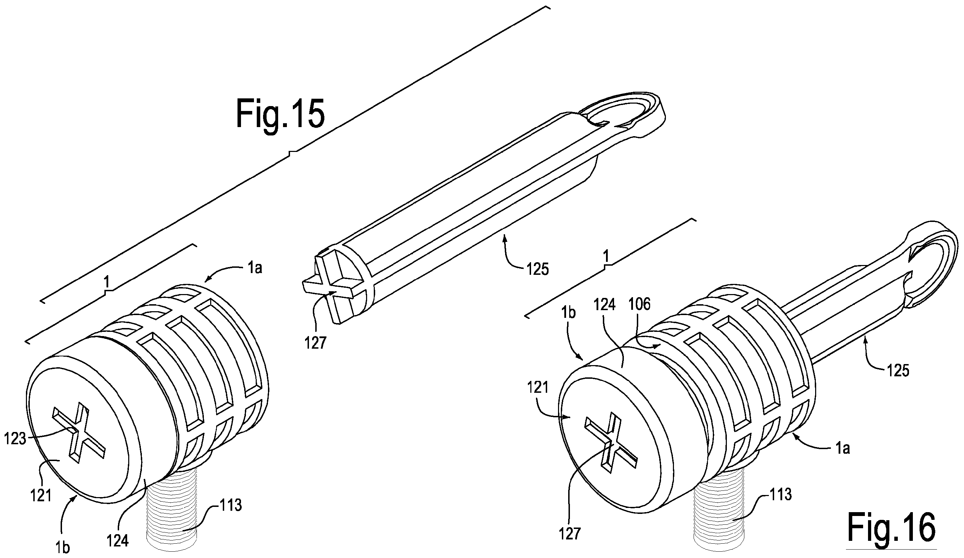

A first embodiment of a kit comprising a sleeve for mounting a hung object, especially a wall-hung bathroom fixture (a bidet or a WC) is shown in Figs. 1 to 5. Figs. 6A-6I show the operations for mounting a bathroom fixture by using the kit comprising the sleeve of Figs. 1 to 5. Figs.6A-6I also illustrate the modes of using the mounting kits comprising the sleeves according to the other embodiments described below with reference to Figs. 7 to 16.

With initial reference to Figs. 1 to 5, a kit is provided for mounting a wall-hung bathroom fixture, the kit comprising an expansible sleeve 1. The sleeve 1 comprises a first element 1a and a second element 1b. In the embodiments illustrated in Figs. 1 to 5, the first element 1a has a through axial cavity 101 extending from one to the other of two axially opposite ends of the element 1a.

In some embodiments, the first element 1a comprises a first hollow body 103 and a second hollow body 105 that are substantially coaxial with each other, i.e. having a common longitudinal axis A-A. The two hollow bodies 103 and 105 can be made in a single piece, for example made of molded plastic. However, other materials can be also used, for instance metals. The two hollow bodies 103, 105 may be realized also as separate components, subsequently assembled together.

The through axial cavity 101 extends through both the hollow bodies 103, 105 and can have a substantially constant diameter, i.e. a diameter equal in both the hollow bodies 103, 105. In practical embodiments, the first hollow body 103 has two end surfaces 104 and 106. The second hollow body 105 extends in axial direction from the end surface 106.

On the end surface 104 of the first hollow body 105, opposite to the end surface 106 from which the second body 105 extends, an annular projection, or ring, 109 is provided, which is substantially coaxial with the through axial cavity 101 for the purposes detailed below.

In some embodiments, the through axial cavity 101 is at least partially threaded. Reference 107 indicates the female thread provided on part of the longitudinal extension of the through axial cavity 101. In the illustrated embodiment, the female thread 107 extends from a distal end (i.e. opposite to the hollow body 103) of the hollow body 105, for a given depth inside the through axial cavity 101, for instance up to inside the first hollow body 103.

In the embodiment illustrated in Figs. 1 to 5, the second hollow body 105 has a substantially cylindrical outer shape, the diameter whereof is preferably smaller than the maximum transverse dimension of the first hollow body 103.

In the embodiment illustrated in Figs. 1 to 5 the first hollow body 103 has a generally cylindrical outer surface, or a surface that can be enveloped in a cylindrical surface, the diameter whereof is greater than the outer diameter of the second body 105.

It is also possible to provide the side outer surfaces of the hollow bodies 103, 105 with a different shape, for example giving to one or the other hollow bodies a prismatic shape.

In the embodiment illustrated in Figs. 1 to 5 the first element 1a of the sleeve 1 also has a transverse hole 111 (Fig.3) that is preferably approximately orthogonal to the axis A-A of the sleeve 1. The transverse hole 111 can be threaded in order to engage a constraint member, for example a screw 113. The screw 113 is preferably a headless screw.

The second element 1b of the sleeve is shown in detail in Figs. 1 and 2. The second element 1b may have an outer cylindrical shape, even if this is not necessary in this embodiment. The outer diameter of the second element 1b of the sleeve 1, if of cylindrical shape, may be substantially equal to the outer diameter of the first element 1a, but also this feature is not mandatory.

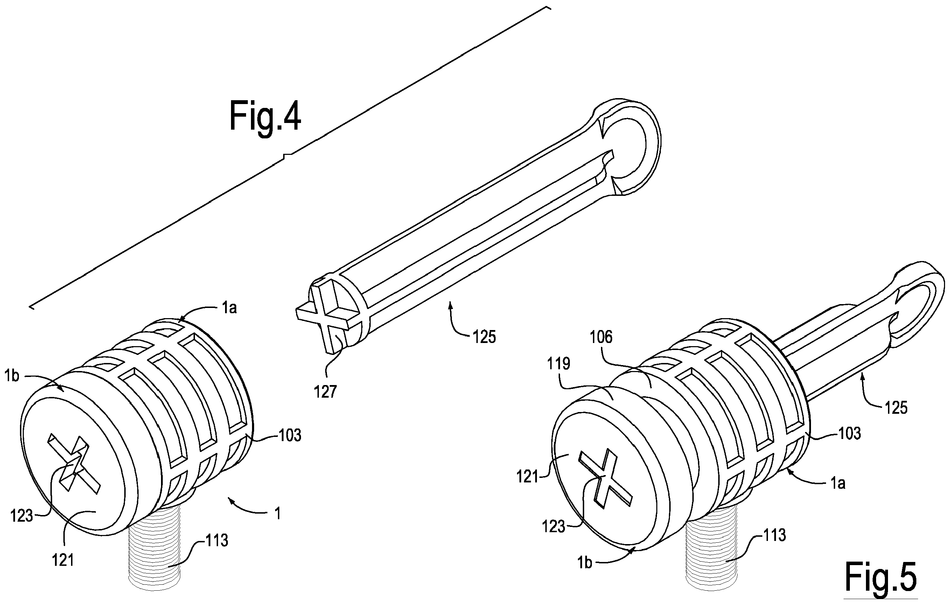

The second element 1b of the sleeve 1 has a portion 115 forming a male thread 117. For example, the second element 1b may have an outer mantle 119, extending around an axis A-A that (when the sleeve 1 is assembled, as in Figs. 4 and 5) coincides with the longitudinal axis A-A of the first element 1a of the sleeve 1. The portion 115 may be in the form of a cylindrical collar inside the outer mantle 119 and coaxial with the axis A-A, and therefore with the outer mantle 119. The male thread 117 can be provided on the outer surface of the collar forming the portion 115. The collar 115 and the preferably cylindrical outer mantle 119 extend from a transverse wall 121 that is preferably orthogonal to the axis A-A.

The second element 1b of the sleeve 1 has a connection means so as to be engaged by a maneuvering tool, generically indicated with number 125 in Figs. 4 and 5, for the purposes that will be detailed with reference to the sequence of Figs. 6A-6I. The connection means may be a slot or a notch provided in the transverse wall 121 of the second element 1a of the sleeve.

In the illustrated embodiment the connection means, indicated with 123, is formed by a cross-shaped notch, i.e. by two cuts approximately orthogonal to each other. Even if in the illustrated example the cross-shaped notch 123 extends through the whole thickness of the wall 121, however this is not necessary. However, this is the preferred configuration as, the thickness of the transverse wall 121 being the same, a larger contact surface between the maneuvering tool 125 and the element 1b of the sleeve 1 and therefore a better transmission of torque between maneuvering tool 125 and element 1b can be obtained.

Moreover, even if it is possible to use a notch with a simpler shape, for example a rectilinear notch, instead of a cross-shaped notch, this latter contributes to increase the contact surface with the maneuvering tool 125 and therefore to increase the torque that can be transmitted by the maneuvering tool 125 to the element 1b of the sleeve 1, thus reducing the risk of deformations of the element 1b. The maneuvering tool 125 has a head 127, the shape whereof is complementary to the notch 123 and which is adapted to couple torsionally to the element 1b of the sleeve 1, in the illustrated example a cross-shaped head 127.

The sleeve 1, the screw 113 and, in case, the tool 125 may be part of a mounting kit that can also comprise an anchoring pin for wall-anchoring, the shape and function whereof (in combination with the sleeve 1) are described below with reference to Figs. 6A-6I. In Fig. 6A-6I the anchoring pin is indicated with 131.

in Figs. 6A-6I the operations are shown for mounting a toilet WC on a wall P by using two kits, each of which comprises a sleeve 1, a screw 113 and a pin 131. The same operations may be performed for mounting other objects to be hung using the same mounting kit.

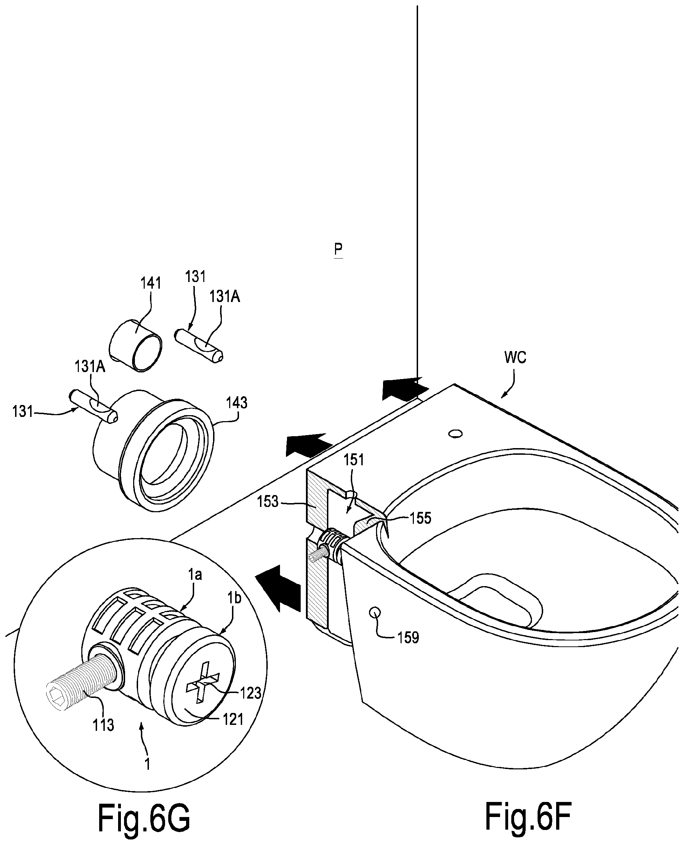

Fig.6A shows a flash pipe 141, feeding water from a tank, not shown, and a discharge pipe 143 projecting from a wall P onto which the toilet WC shall be mounted. To fix the toilet WC to the wall P two threaded bars 145 are provided, anchored to the wall, for example integral with a bracket (not visible) arranged below the covering of the wall P, in a way known by those skilled in the art. Two anchoring pins 131 are screwed on the two threaded bars 145 previously cut to-measure. In Fig.6A one of the two anchoring pins 131 has been already screwed on the respective threaded bar 145, whilst the other one shall be mounted. To this end, the anchoring pins 131 have a threaded blind axial hole engaging, in screw-like fashion, the respective threaded bar 145. In Fig. 6F both the anchoring pins 131 are screwed on the respective threaded bars 145.

As shown in Figs. 6A, 6F, near the end opposite to the end that (in mounted arrangement) faces the wall P and where the respective threaded bar 145 is screwed, each anchoring pin 131 has an elongated flaring 131A, extending in the direction of the axial extension of the respective anchoring pin 131. The screw 113 co-acts with the elongated flaring 131 in the ways and for the purposes described below.

The operations for mounting the toilet WC to the wall P comprise, in addition to screwing the anchoring pins 131 on the threaded bars 145, the mounting of two sleeves 1 on the toilet WC and more in particular in two respective niches 151 provided in the material of the toilet WC. The niches 151 are accessible from the outside of the toilet WC, for example they can be opened downwards, when the toilet WC is fixed to the wall P, so as not to be visible. Each niche 151 is delimited by a first wall 153 and by a second wall 155. Each first wall 153 may have a through opening 157, preferably shaped like a hole with circular cross-section, accessible from the outside of the toilet WC and ending in the niche 151. The outer surface 153A of the first wall 153 is intended to rest against the wall P where the toilet WC shall be mounted.

Figs. 6A, 6B, 6C show the steps of inserting and stopping a sleeve 1 in each niche 151 of the toilet WC. To this end, the toilet WC may be rotated with the mouth thereof facing downwards, so as to make the niches 151 easily accessible by the operator. Each sleeve 1 is inserted in the respective niche 151 with the axis A-A substantially orthogonal to the walls 153, 155, i.e. so that the axis A-A is parallel to the axis of the opening 157. The ring 109 facilitates aligning the sleeve 1 with the hole or opening 157.

To allow inserting the sleeve 1 into the niche 151, the elements 1a and 1b are completely screwed together, so as to reduce the overall axial dimension of the sleeve 1, or they are screwed to an extent sufficient to have a dimension of the sleeve 1 in direction of the axis A-A smaller than the distance between the opposite surfaces of the walls 153 and 155.

Once the sleeve 1 has been positioned in the niche 151 so that the through axial cavity 101 thereof is aligned with the opening 157, the operator can insert the maneuvering tool 125 through the opening 157 and inside the through axial cavity 101 up to engage the element 1b of the sleeve 1 with the head 127 of the maneuvering tool 125. By rotating the element 1b of the sleeve 1 with respect to the element 1a in the direction of reciprocal unscrewing, the axial dimension of the sleeve 1 is increased until the sleeve 1 is locked in the niche 151.

This operation is performed for each of the sleeves 1 inserted in the two niches 151 of the toilet WC.

Each sleeve 1 may be suitably oriented around the axis A-A thereof before being locked in the niche 151 so that the hole 111 thereof is aligned with a through hole 159 provided in the side wall of the toilet WC. This orientation allows inserting from the outside of the toilet WC the screw 113 into the threaded hole 111 for the purposes explained below.

When both the sleeves 1 have been fixed in the niche 151 the toilet WC can be anchored to the wall P. As shown in Fig.6F, the toilet WC is rotated and brought to the position of use. The correctly oriented toilet WC is moved towards the wall P by aligning the openings 157 with the anchoring pins 131 previously screwed on the threaded bars 145. The pins are so rotated as to arrange the elongated flarings 131A directed opposite to each other. In Fig.6G an enlargement is shown of the sleeve 1 with the screw 113 partially screwed in the transverse hole 111 of the sleeve.

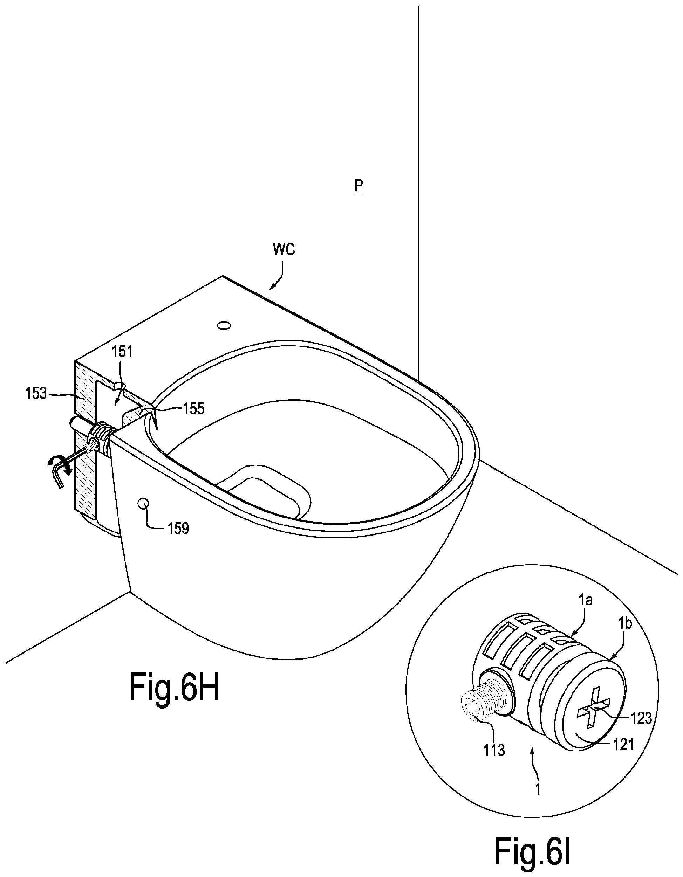

By moving the toilet WC towards the wall P, the anchoring pins 131 are inserted through the opening 157 and enter the through axial cavities 101 of the sleeves 1, as shown in Fig. 6H. Advantageously, the axial dimension of the pins 131 and/or the position thereof on the threaded bars 145 are so selected that the elongated flarings 131A are approximately in correspondence of the side holes 159 when the toilet WC is moved towards the wall P.

At this point, by screwing the screws 113 into the threaded holes 111 by means of a wrench inserted through the holes 159, a thrust of the tips of the screws 113 is generated on the inclined parts of the flarings 131A. In the enlargement of Fig. 6I the screw 113 has been screwed inside the hole 111 with respect to the position shown in Fig. 6G. Thanks to the inclination of the flarings 131A the thrust of the screw 113 transforms into a traction force onto the respective pins 131 and therefore in a thrust of the toilet WC against the wall P, as known to those skilled in the art.

It is clearly apparent that with the above described configuration of the sleeve 1 in two parts (elements 1a, 1b) it is possible preliminarily to anchor the sleeve 1 in the respective niche 151, by telescopically adapting the length of the sleeve 1 to the width of the niche 151. In this way the sleeve 1 can adapt to bathroom fixtures of different shape and may also compensate for the construction tolerances typical of the bathroom fixture made of ceramic, tolerances that vary significantly with the wear of the molds and that can result into changes, also of several millimeters, in the width of the niche 151 among different items of the same bathroom fixture.

The particular shape of the sleeve 1 described with reference to Figs. 1 to 5 allows to have some particular advantages, in addition to the possibility of being adapted to the size of the niche 151. In particular, the presence of a female thread 107 allows to use the described kit, and more precisely the element 1a of the sleeve 1 and the screw 113, even with other fixing systems for fixing to the bathroom fixture, for example systems of the type described in DE202009014171.

The shape of the element 1b, with the threaded collar 115 projecting towards the element 1a, further allows to introduce the anchoring pin 131 for a great extent inside the sleeve 1, thus providing for a particularly safe anchoring to the wall P.

A second embodiment of the sleeve 1 is shown in Figs. 7 to 11. Equal or equivalent parts to those illustrated in Figs. 1 to 5 and described above are indicated with the same reference numbers and will not be described again. Here below the main differences between the two embodiments will be highlighted.

The sleeve 1 of Figs. 7 to 11 mainly differs from the sleeve of Figs. 1 to 5 in the different shape of the element 1b. This has substantially the shape of a small cylinder with a wall externally threaded with a male thread 117 formed on a wall 115 functionally corresponding to the cylindrical collar 115 of Figs. 1 to 5.

The outer surface of the wall 121 of the element 1b may be provided with reliefs 121A increasing the friction against the wall 155 of the niche 151. Similar reliefs 121A may be also provided in the embodiment of Figs. 1 to 5.

The element 1a has a single hollow body 103 and is not provided with the hollow body 105. The female thread 102 extends entirely inside the hollow body 103.

The method of use of the sleeve of Figs. 7 to 11 is the same as described with reference to Figs. 6A-6I and will not be described again.

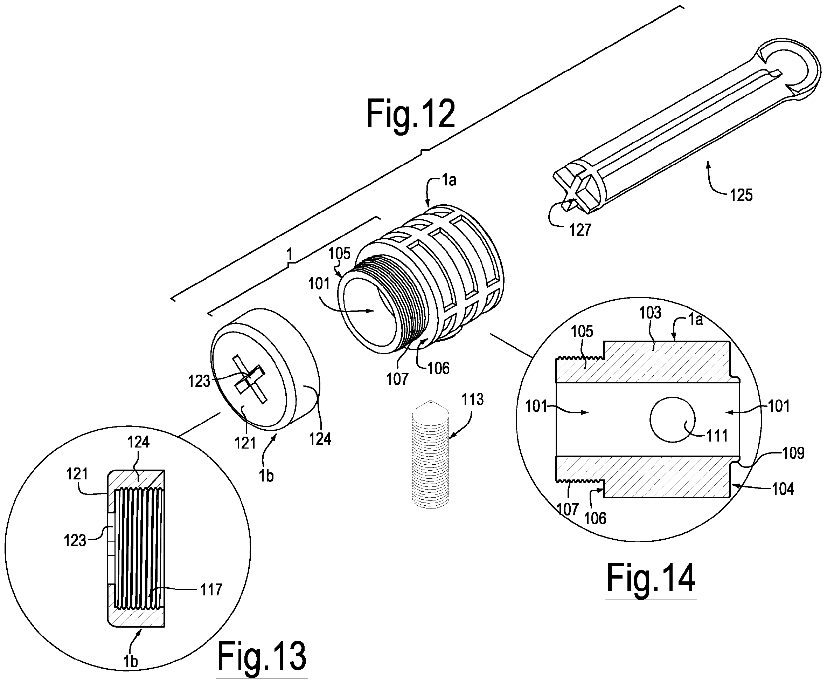

In Figs. 12 to 16 a third embodiment of the sleeve 1 is shown. Equal or equivalent parts to those illustrated in Figs. 1 to 5 and described above are indicated with the same reference numbers and will not be described again. Below the main differences between the two embodiments will be highlighted.

The sleeve 1 of Figs. 12 to 16 differs from the sleeve of Figs. 1 to 5 mainly for the different shape of the element 1b. This latter substantially has the shape of a small cylinder with a wall or outer collar 124 with a thread 117, having the same function as the thread 117 described in the previous exemplary embodiments, but that in this case is a female thread.

The female thread 117 engages in screw-like fashion with a male thread 107 provided on the hollow body 105 projecting from the hollow body 103 of the element 1a of the sleeve 1.

The operation of the sleeve of Figs. 12 to 16 is substantially the same as that described with reference to Figs. 6A to 6I.

Whilst the invention has been described above with specific reference to non-limiting embodiments, the scope of the invention is defined by the attached claims.

Moreover, the specific object of the invention is also an expansible sleeve comprising:
- a first element (1a):
   - constituted by two hollow bodies, an outer body (103) and an inner body (105), put over each other, the diameter of the inner surface whereof is substantially the same;
   - having a female thread (107) provided on the inner surface of the inner body (106) so as to ensure the connection with a second element (1b) of the sleeve;
   - having preferably a centering ring (109) provided on the free surface (104) of the outer body (103) and with the same inner diameter as the two hollow bodies (103, 105);
- a second element (1b):
   - having a male thread (117) with the same nominal diameter as the female thread (107) provided on the first element (1) and necessary to couple it to said first element (1a);
   - provided with a slot or a notch (123) to ensure the application of a maneuvering wrench or maneuvering tool (125);
   - adapted to move forward relatively with respect to said first element (1a) under the action of the maneuvering wrench (125).

## Claims

1. Kit for mounting a wall-hung bathroom fixture, the kit comprising a sleeve (1), having:
a first element (1a) with a through axial cavity (101);
a second element (1b) that can coaxially engage the first element (1a);
a screw coupling (107, 117) between the first element (1a) and the second element (1b), with a first thread (107) at a first end of the first element (1a) and a second thread (117) on the second element (1b), that can engage the first thread (107); the screw coupling being so configured that when the first thread (107) and the second thread (117) engage each other, the reciprocal rotation between the first element (1a) and the second element (1b) causes a change in the axial length of the sleeve (1);
wherein the second element (1b) of the sleeve (1) comprises a connection means (123) so configured and arranged to be engaged by means of a maneuvering tool (125) through the through axial cavity (101), to rotate the second element (1b) with respect to the first element (1a) so as to cause ad adjustment in the axial length of the sleeve (1).

2. The kit of claim 1, wherein the first thread (107) is a female thread and the second thread (117) is a male thread, and wherein the female thread (107) is provided in an inner surface of the through axial cavity (101) of the first element (1a) of the sleeve (1).

3. The kit of claim 1 or 2, wherein the first element (1a) of the sleeve (1) comprises a first hollow body (103) and a second hollow body (105) integral and substantially coaxial with each other; wherein preferably the first thread (107) is provided on the second hollow body (105) of the first element (1a) of the sleeve (1), projecting from an end (106) of the first hollow body (103); and wherein preferably the first thread (107) is a male thread and the second thread (117) is a female thread, and wherein the first thread (107) is provided on the second hollow body (105) of the first element (1a) of the sleeve (1).

4. The kit of one or more of the previous claims, wherein the second element (1b) of the sleeve (1) has a body with a threaded collar (115; 124) and a wall (121) transverse to the collar, the wall forming the connection means (123) for engaging the maneuvering tool (125).

5. The kit of one or more of the previous claims, further comprising an anchoring pin (131) that can be inserted into said through axial cavity (101) of the sleeve (1), the anchoring pin (131) being insertable into the through axial cavity (103) from and end of the first element (1a) opposite to the second element (1b).

6. The kit of one or more of the previous claims, wherein the first element (1a) of the sleeve (1) comprises a substantially radial through hole (111), and a constraint member (113) insertable into said through hole (111), and wherein preferably the constraint member (113) comprises a screw, and wherein the through hole (111) is threaded to engage said screw (113).

7. The kit of claim 8 or 9, wherein the anchoring pin (131) comprises a flaring (131A) elongated according to an axial direction of the anchoring pin (131) and of the sleeve (1), co-acting with the constraint member (113), to generate on the anchoring pin (131) a traction force by inserting the constraint member (113) into the through hole (111).

8. The kit of one or more of the previous claims, wherein the first element (1a) comprises a centering ring (109) substantially coaxial with the through axial cavity (101) and provided on an end surface opposite with respect to the second element (1b).

9. The kit of one or more of the previous claims, further comprising a maneuvering tool (125).

10. A system comprising wall-hung bathroom fixture (WC) and at least one kit of one or more of the previous claims; wherein the bathroom fixture comprises a niche (151) adapted to receive said sleeve; wherein said niche (151) is delimited by a first wall (153) and by a second wall (155); and wherein the first wall (153) has a through opening (157) accessible from the outside of the fixture and ending in the niche (151).

11. A method for fixing a wall-hung bathroom fixture to a bearing structure by means of two kits according to any one of the preceding claims; two niches that can be accessed from the outside of the bathroom fixture and are delimited by opposite first wall and second wall, the first wall having a through opening for each niche; the method comprising the following steps:
- inserting, into each niche the sleeve of one of said kits, so that the first element of the sleeve is directed towards the first wall g and the second element of the sleeve is directed towards the second wall;
- aligning the through axial cavity of each sleeve with the through opening of the first wall;
- for each of said sleeves, inserting a maneuvering tool through the through opening of the first wall and through the through axial cavity of the sleeve, up to engage the second element of the sleeve with the maneuvering tool;
- through said maneuvering tool, rotating the second element of each sleeve with respect to the first element of the sleeve, so as axially to elongate the sleeve up to stop it in the respective niche through interference.

12. The method of claim 11, further comprising the following steps:
- mounting each anchoring pin of the two kits on a respective bar anchored to a bearing structure where the bathroom fixture shall be mounted;
- moving the bathroom fixture towards the bearing structure, inserting the anchoring pins through the through openings into the first wall of the bathroom fixture and into the through axial cavity of each sleeve;
- generating a traction force on the anchoring pin in order to press the bathroom fixture against the bearing structure.

13. The method of claim 14, wherein the step of generating a traction force on the anchoring pin comprises the step of inserting a constraint member through a substantially radial hole of the sleeve, said constraint member co-acting with a flaring provided in the anchoring pin and extending according to the axial direction of the anchoring pin, a radial thrust of the constraint member generating a thrust onto the bathroom fixture in axial direction with respect to the anchoring pin and against the bearing structure.

14. Expansible sleeve for facilitating the installation of systems for wall-fixing, **characterized by** comprising a first element and a second element;
- wherein the first element:
- is constituted by a first hollow body and a second hollow body put over each other, whose diameter of an inner surface is substantially the same;
- has a female thread provided on the inner surface of the first body so as to ensure the connection with the second element;
- wherein the second element:
- has a male thread with the same nominal diameter as the thread that is provided on the first element adapted to couple the second element to said first element;
- is provided with a slot to ensure the application of a maneuvering wrench;
- is adapted to move forward with respect to said first element under the action of the maneuvering wrench.
